# EUROPÄISCHE PATENTSCHRIFT

(11) **EP 3 802 191 B1**
(45) Veröffentlichungstag und Bekanntmachung des Hinweises auf die Patenterteilung: **10.08.2022**
(21) Anmeldenummer: 19732911.3
(22) Anmeldetag: 04.06.2019
(51) Int. Cl.: B60K 35/00, B60K 37/06

(54) **VERFAHREN UND SYSTEM ZUM BETREIBEN EINER AUTOMATISCHEN FAHRFUNKTION IN EINEM FAHRZEUG**
METHOD AND SYSTEM FOR OPERATING AN AUTOMATIC DRIVE FUNCTION IN A VEHICLE
PROCÉDÉ ET SYSTÈME POUR FAIRE FONCTIONNER UNE FONCTION D'ENTRAÎNEMENT AUTOMATIQUE D'UN VÉHICULE

(30) Priorität: 08.06.2018 DE 102018209191
(43) Veröffentlichungstag der Anmeldung: 14.04.2021
(73) Patentinhaber: VOLKSWAGEN AKTIENGESELLSCHAFT, 38440 Wolfsburg (DE)
(72) Erfinder: MICHAELIS, Jörn, 10785 Berlin (DE); BARTHEL, Maximilian, 04416 Markkleeberg (DE)
(86) Internationale Anmeldenummer: PCT/EP2019/064395
(87) Internationale Veröffentlichungsnummer: WO 2019/233968

(56) Entgegenhaltungen:
- JP-A- 2004 058 918
- US-A1- 2017 197 637
- US-B2- 8 924 150

## Beschreibung

Die vorliegende Erfindung betrifft ein Verfahren und ein System zum Betreiben einer automatischen Fahrfunktion in einem Fahrzeug.

Bei modernen Fahrzeugen ist in zunehmendem Maße vorgesehen, dass einzelne oder komplexe Abfolgen von Fahreraufgaben zu einem hohen Grad automatisiert durchgeführt werden können, bis hin zur vollautomatischen Fahrt entlang einer gewünschten Route. Die Nutzer eines solchen Fahrzeugs können die Fahrt durch manuelle Eingriffe in einem bestimmten Maß beeinflussen, insbesondere durch die Angabe einer Zielposition, das Planen einer Route zu dem Ziel oder durch Einstellungen, die bestimmte automatisierte Fahrfunktionen betreffen. Dabei ist festzustellen, dass bei existierenden Systemen aufwendige Bedienvorgänge notwendig sind, um während einer teilweise oder vollständig automatisierten Fahrt auf die Fahrt oder die Fahrweise des automatischen Systems, etwa eines Autopiloten, Einfluss zu nehmen.

Aus der DE 10 2014 208 311 A1 ist ein Fahrerassistenzsystem bekannt, bei dem die Fahrzeugführung an die individuellen Bedürfnisse des Fahrzeugführers angepasst ist. Hierfür ist ein Benutzerprofil mit mehreren Parametern vorgesehen, die etwa anhand des Verhaltens des Benutzers bei einer Fahrt mit einem Simulator oder bei einer manuell gesteuerten Fahrt bestimmt werden.

Die DE 10 2016 203 827 A1 schlägt ein Verfahren vor, bei dem während einer automatischen Fahrt eine Anweisung eines Fahrzeuginsassen erfasst und anhand der Anweisung eine neue Fahrtroute bestimmt wird.

Die US 2017/197637 A1 beschreibt ein Verfahren nach dem Oberbegriff des Anspruchs 1.

Der vorliegenden Erfindung liegt daher die Aufgabe zugrunde, ein Verfahren und ein System der eingangs genannten Art zur Verfügung zu stellen, bei denen die Nutzer eines Fahrzeugs einfach und schnell die Funktionsweise einer automatischen Fahrfunktion beeinflussen und steuern kann.

Erfindungsgemäß wird diese Aufgabe durch ein Verfahren mit den Merkmalen des Anspruchs 1 und ein System mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren werden Umfelddaten in einer Umgebung des Fahrzeugs erfasst und anhand der erfassten Umfelddaten werden Grafikdaten einer Umfelddarstellung erzeugt und ausgegeben. Dabei umfasst die Umfelddarstellung zumindest ein erstes Bedienobjekt, wobei, wenn eine Betätigung eines ersten Bedienobjekts erfasst wird, ein Auswahlobjekt erzeugt wird, das dem ersten Bedienobjekt zugeordnet ist. Es wird eine Betätigung des Auswahlobjekts erfasst und in Abhängigkeit von dem Betätigen des Auswahlobjekts wird ein Steuersignal erzeugt, wobei die automatische Fahrfunktion in Abhängigkeit von dem Steuersignal ausgeführt wird.

Dadurch kann vorteilhafterweise eine grafische Bedienoberfläche bereitgestellt werden, anhand derer ein Nutzer die von ihm gewünschten Einstellungen und Steuerungsanweisungen besonders einfach, schnell und intuitiv eingeben kann. Dies führt auch zu einer ergonomisch vorteilhaften Bedienung, da die relevanten Bedienelemente in besonders leicht erreichbarer Weise angeordnet sind. Der Eingriff in eine automatische Fahrfunktion kann außerdem sehr schnell erfolgen, da eine unmittelbare Betätigung über das Bedienobjekt und das Auswahlobjekt möglich ist. Hierdurch wird die Sicherheit beim Betreiben der automatischen Fahrfunktion erhöht. Dem Nutzer kann zudem ein größeres Vertrauen in die automatische Fahrfunktion vermittelt werden, da er klare Interaktionsmöglichkeiten hat und Daten des Systems leicht erfassbar dargestellt werden können. Es ist daher nicht nötig, einen Autopilot oder eine ähnliche automatische Fahrfunktion unvermittelt auszuschalten, um dem Fahrer einen Eingriff in die Steuerung zu erlauben. Zudem kann durch die erzeugte Darstellung auch für einen Beifahrer und/oder einen weiteren Fahrzeuginsassen so sichtbar und gegebenenfalls bedienbar sein, dass dieser nicht von automatischen Fahrmanövern überrascht wird.

Die Erfassung der Umfelddaten erfolgt auf an sich bekannte Weise, insbesondere mittels Sensoren des Fahrzeugs. Die Sensoren können beispielsweise optische, elektromagnetische, akustische oder andere Sensoren umfassen. Beispielsweise kann eine Kamera, eine Stereokamera, eine 3D-Kamera, eine Infrarotkamera, ein Lidar- oder Radarsensor oder ein Ultraschallsensor verwendet werden. Die Umfelddaten umfassen insbesondere verkehrsrelevante Regelobjekte, etwa andere Verkehrsteilnehmer, Verkehrsregelungseinrichtungen und Markierungen eines Straßenverlaufs oder andere Markierungen entlang eines Verkehrswegs. Die Erfassung der Umfelddaten ist dabei insbesondere an die automatische Fahrfunktion angepasst und ist geeignet, die zur Durchführung der automatischen Fahrfunktion notwendigen Informationen bereitzustellen. Zusätzlich oder alternativ können die Umfelddaten mittels einer Schnittstelle zu einer externen Einrichtung erfasst werden, beispielsweise einer zentralen Erfassungseinrichtung wie einer Kamera zur Verkehrsbeobachtung oder einem externen Dienst, etwa einem externen Server. Die Umfelddaten umfassen insbesondere Positionen, Richtungen und Geschwindigkeiten verkehrsrelevanter Objekte in der Umgebung des Fahrzeugs. Insbesondere sind auch Daten über einen Fahrzustand des eigenen Fahrzeugs umfasst, etwa die Position, Geschwindigkeit, Richtung oder befahrene Route.

Die Umfelddarstellung umfasst zumindest ein grafisches Element, das eine aus den Umfelddaten hervorgehende Information repräsentiert. Insbesondere ist das von der Umfelddarstellung umfasste erste Bedienobjekt eine Repräsentation des eigenen Fahrzeugs (Ego-Fahrzeug). Das erste Bedienobjekt kann dabei insbesondere eine Fahrzeugdarstellung umfassen. Die Umfelddarstellung kann ferner eine Repräsentation verkehrsrelevanter Objekte in der Umgebung des Fahrzeugs umfassen, insbesondere in einer schematischen Darstellung. Dabei werden insbesondere weitere Verkehrsteilnehmer, etwa Fahrzeuge oder Fußgänger, Spurmarkierungen und/oder ein Straßenverlauf dargestellt. Das erste Bedienobjekt repräsentiert insbesondere ein Element der Verkehrslage im Umfeld des Fahrzeugs, etwa das eigene Fahrzeug. So kann etwa das erste Bedienobjekt an einer Position innerhalb der Umfelddarstellung angeordnet sein, die der Position des Fahrzeugs auf der Straße, insbesondere auf einem bestimmten Fahrstreifen, entspricht. Das Bedienobjekt ist also insbesondere nicht als einfache geometrische Schaltfläche oder ein ähnliches Element in einer statischen Darstellung ohne Bezug zu der Verkehrslage im Umfeld des Fahrzeugs ausgebildet.

Die Betätigung des ersten Bedienobjekts kann auf an sich bekannte Weise erfasst werden, beispielsweise durch Auswahl des ersten Bedienobjekts innerhalb einer grafischen Bedienoberfläche mittels eines Touchscreens, Touchpads, Joysticks, Dreh-Drück-Stellers oder Lenkstockschalters. Alternativ oder zusätzlich sind weitere Möglichkeiten der Betätigung denkbar. Beispielsweise kann die Umfelddarstellung ein als Fahrzeugsymbol dargestelltes erstes Bedienobjekt umfassen und die Betätigung kann durch Berühren eines Touchscreens im Bereich des Bedienobjekts erfolgen.

Das nach dem Betätigen des Bedienobjekts erzeugte Auswahlobjekt kann auf unterschiedliche Weise ausgebildet sein. Es kann beispielsweise als Pop-up-Fenster oder nach Art eines Kontextmenüs ausgebildet sein. Es kann insbesondere mehrere Auswahlmöglichkeiten umfassen, die etwa als einzelne Schaltflächen innerhalb des Auswahlobjekts dargestellt sind. Insbesondere umfasst das Auswahlobjekt mehrere Auswahlmöglichkeiten, die verschiedenen Fahrmanövern oder anderen unterschiedlichen Aspekten oder Funktionalitäten der automatischen Fahrfunktion zugeordnet sind.

Bei der Betätigung des Auswahlobjekts wird erfasst, wie die Betätigung erfolgt, beispielsweise welcher Bereich des Auswahlobjekts betätigt wird und ob der Betätigung eine bestimmte Auswahlmöglichkeit oder Funktionalität zugeordnet ist. Wenn also das Steuersignal in Abhängigkeit von dem Betätigen des Auswahlobjekts erzeugt wird, dann wird zunächst bestimmt, wie das Betätigen erfolgt ist beziehungsweise es wird ein Eingabeparameter bei der Betätigung erfasst und anschließend wird ein entsprechendes Steuersignal erzeugt. Zum Beispiel kann das Auswahlobjekt ein Kontextmenü umfassen, bei dessen Betätigung ein Touchscreen im Bereich des Kontextmenüs und einer bestimmten Auswahlmöglichkeit berührt wird. In Abhängigkeit von der Betätigung wird ein Steuersignal erzeugt und an eine Einrichtung übertragen, welche die automatische Fahrfunktion steuert. Anhand des Steuersignals kann Einfluss auf die Funktionsweise der automatischen Fahrfunktion genommen werden, beispielsweise indem ein bestimmtes Manöver angefordert oder eine bestimmte Fahrweise eingestellt wird. Dabei wird insbesondere anhand des Steuersignals ein Steuerbefehl für die automatische Fahrfunktion erzeugt. Die Ausführung kann dabei unmittelbar oder zeitlich verzögert erfolgen, wobei insbesondere die Ausführung verzögert wird, bis sie sicher erfolgen kann.

Die Umfelddarstellung umfasst insbesondere ferner eine Planungsanzeige mit einem grafischen Element, das ein derzeit durchgeführtes und/oder zukünftig geplantes Fahrmanöver darstellt. Beispielsweise kann anhand einer Pfeildarstellung ein geplanter Spurwechsel oder Überholvorgang dargestellt werden, in ähnlicher Weise kann ein Richtungswechsel, insbesondere ein Verlassen einer Fahrbahn, dargestellt werden. Eine Planungsanzeige kann ferner ein vorhergesagtes Verhalten eines anderen Verkehrsteilnehmers umfassen, beispielsweise wenn erkannt wird, dass ein anderes Fahrzeug zum Überholen ansetzt oder vor dem eigenen Fahrzeug einscheren will. Die Planungsanzeige kann ferner Informationen einer Routenplanung umfassen, beispielsweise eine Markierung eines zu befahrenden Weges oder eine geplante Richtungsänderung, um einer geplanten Route zu folgen.

Bei dem Verfahren gemäß der Erfindung repräsentiert die Umfelddarstellung die tatsächliche oder eine prognostizierte Verkehrssituation im Umfeld des Fahrzeugs. Insbesondere steht dabei das eigene Fahrzeug im Zentrum der Umfelddarstellung und wird durch ein entsprechendes grafisches Objekt, insbesondere das erste Bedienobjekt, dargestellt. Beispielsweise umfasst die Umfelddarstellung grafische Objekte zur Repräsentation anderer Verkehrsteilnehmer in einer Anordnung, welche der tatsächlichen Situation im Umfeld des Fahrzeugs entspricht, insbesondere in einer schematischen Ausbildung. Beispielsweise geht aus der Umfelddarstellung hervor, ob sich ein weiteres Fahrzeug in Fahrtrichtung vor dem eigenen Fahrzeug befindet, insbesondere auch in welchem Abstand. Analog dazu können andere Fahrzeuge oder weitere Verkehrsteilnehmer hinter dem eigenen Fahrzeug oder auf weiteren Fahrspuren angezeigt werden, beispielsweise entgegenkommende Fahrzeuge oder in der gleichen Fahrtrichtung auf einem benachbarten Fahrstreifen fahrende Fahrzeuge.

Bei einer Ausbildung des erfindungsgemäßen Verfahrens wird in Abhängigkeit von dem Betätigen des Auswahlobjekts ein Steuersignal erzeugt, das einen Spurwechsel, ein Abbiegen, eine Änderung des Abstandes zu anderen Verkehrsteilnehmern oder eine Änderung der Geschwindigkeit des Fahrzeugs betrifft. Dadurch kann vorteilhafterweise auf besonders wichtige Parameter automatischer Fahrfunktionen Einfluss genommen werden. Ferner können andere Manöver gesteuert werden, etwa ein Überholvorgang, das Anfahren eines bestimmten Sonderziels, beispielsweise des nächsten Rastplatzes, oder das Verlassen der derzeit befahrenen Straße bei der nächsten Ausfahrt. Insbesondere wird dabei sichergestellt, dass die Führung des Fahrzeugs jederzeit sicher erfolgen kann, das heißt, dass beispielsweise ein vorgegebener Sicherheitsabstand gewahrt werden kann. Gleichzeitig kann ein Manöver angefordert werden, ohne dass hierfür die aktuell befahrene Route neu programmiert, die automatische Fahrfunktion beendet und/oder manuell in die Fahrt eingegriffen werden muss.

Die genannten Manöver oder Parameter von automatischen Steuerungsfunktionen beziehen sich insbesondere auf den Verkehrsteilnehmer, der durch das erste Bedienobjekt repräsentiert wird, insbesondere also das eigene Fahrzeug. Dadurch steht die Bedienung in direktem Zusammenhang mit der Verkehrssituation, das heißt, der Nutzer betätigt das Bedienobjekt, das seinem eigenen Fahrzeug zugeordnet ist, und kann dann Parameter zur Steuerung genau dieses Fahrzeugs einstellen.

Erfindungsgemäß umfasst die Umfelddarstellung zumindest ein weiteres Bedienobjekt, wobei, wenn eine Betätigung eines weiteren Bedienobjekts erfasst wird, ein weiteres Auswahlobjekt erzeugt wird, das dem betätigten weiteren Bedienobjekt zugeordnet ist. Es wird eine Betätigung des weiteren Auswahlobjekts erfasst und in Abhängigkeit von dem Betätigen des weiteren Auswahlobjekts wird ein Steuersignal erzeugt, wobei die automatische Fahrfunktion in Abhängigkeit von dem Steuersignal ausgeführt wird. Dadurch können vorteilhafterweise verschiedene Auswahlobjekte zur Steuerung der automatischen Fahrfunktion bereitgestellt und in einer Darstellung mit Bedienobjekten im Zusammenhang beispielsweise mit anderen Verkehrsteilnehmern zur Verfügung gestellt werden.

Insbesondere repräsentiert das weitere Bedienobjekt einen anderen Verkehrsteilnehmer als das eigene Fahrzeug. Zum Beispiel kann das weitere Bedienobjekt innerhalb der Umfelddarstellung so ausgegeben werden, dass es in seiner Anordnung gegenüber dem ersten Bedienobjekt, welches dem eigenen Fahrzeug entspricht, so angeordnet ist, wie dies in der tatsächlichen Verkehrssituation der Fall ist. Insbesondere kann dabei eine Vereinfachung oder Abstraktion der tatsächlichen Verkehrssituation vorgenommen werden, sodass die Darstellung des verkehrsrelevanten Umfelds vereinfacht erfolgt. Insbesondere geht aus der Anordnung des ersten und des weiteren Bedienobjekts innerhalb der Umfelddarstellung hervor, ob ein weiterer Verkehrsteilnehmer hinter, vor oder neben dem eigenen Fahrzeug fährt. Ferner kann in der Darstellung ausgegeben werden, ob und inwieweit ein anderer Verkehrsteilnehmer sich an das eigene Fahrzeug annähert oder von diesem entfernt.

Das weitere Auswahlobjekt umfasst insbesondere Schaltflächen für verschiedene Manöver, wobei die Auswahlmöglichkeiten bei dem weiteren Auswahlobjekt anders ausgebildet sein können als bei dem Auswahlobjekt, welches dem ersten Bedienobjekt zugeordnet ist.

Bei einer Ausbildung des Verfahrens wird in Abhängigkeit von dem Betätigen des weiteren Auswahlobjekts ein Steuersignal erzeugt, das ein Fahrmanöver im Verhältnis zu einem anderen Verkehrsteilnehmer betrifft. Dadurch kann vorteilhafterweise die automatische Fahrfunktion so gesteuert werden, dass anhand des weiteren Bedienobjekts ein Fahrmanöver durchgeführt oder unterstützt werden kann, welches ein Verhalten des eigenen Fahrzeugs in Bezug zu anderen Verkehrsteilnehmern betrifft.

Ein solches Fahrmanöver im Verhältnis zu einem anderen Verkehrsteilnehmer kann beispielsweise ein Überholmanöver sein. Es kann ferner ein Vorbeifahren betreffen oder das eigene Fahrzeug kann einem anderen Fahrzeug folgen. Es kann ferner vorgesehen sein, dass eine Kommunikationsverbindung zu dem anderen Verkehrsteilnehmer aufgebaut wird, beispielsweise mittels einer datentechnischen Verbindung, durch die etwa ein Steuerungssignal und/oder eine Nachricht, insbesondere eine Text- oder andere Nachricht an einen anderen Fahrzeugführer, gesendet werden kann.

Bei einer weiteren Ausbildung werden die Grafikdaten an ein Nutzergerät übertragen und durch das Nutzergerät ausgegeben, wobei das Nutzergerät einem Beifahrer oder einem Fahrzeugpassagier zugeordnet ist. Dadurch können vorteilhafterweise neben dem Fahrzeugführer auch andere Insassen des eigenen Fahrzeugs sowie gegebenenfalls weitere Personen auf Informationen der Umfelddarstellung zugreifen sowie gegebenenfalls steuernd eingreifen. Alternativ oder zusätzlich kann eine Planungsfunktionalität vorgesehen sein, bei welcher mehrere Personen anhand eigener Nutzergeräte die Fahrt kooperativ planen oder beeinflussen können.

Das Nutzergerät kann ein fahrzeugexternes Gerät sein, beispielsweise ein Mobiltelefon, ein Tablet-Computer oder ein anderer tragbarer Computer. Das Nutzergerät kann ferner ein fahrzeuginternes Gerät sein, beispielsweise ein im Fahrzeug integrierter Touchscreen, etwa auf der Beifahrerseite oder im Fahrzeugfond für weitere Fahrzeuginsassen. Das Nutzergerät kann auf unterschiedliche Weise mit dem Fahrzeug gekoppelt sein, insbesondere mittels einer drahtlosen datentechnischen Verbindung oder durch den Anschluss eines Kabels, insbesondere mithilfe einer im Fahrzeug integrierten Aufnahmevorrichtung (cradle).

Bei einer weiteren Ausbildung kann das Nutzergerät einem anderen Nutzer als dem Beifahrer oder einem Fahrzeuginsassen zugeordnet sein, beispielsweise einem Bediener, der über eine datentechnische Verbindung auf die Fahrt des Fahrzeugs Einfluss nehmen und gegebenenfalls eingreifen kann.

Bei einer weiteren Ausbildung wird eine Identifikation des Nutzergeräts durchgeführt und die Auswahlobjekte werden in Abhängigkeit von der Identifikation erzeugt. Alternativ oder zusätzlich kann eine Identifikation des Nutzers durchgeführt werden. Dadurch können vorteilhafterweise die Informationen, die mittels eines Nutzergeräts ausgegeben werden, anhand unterschiedlicher Berechtigungen gesteuert werden. Ferner können die Fahrfunktionen, die mittels der Auswahlobjekte steuerbar sind, an die unterschiedlichen Berechtigungen und Rollen verschiedener Nutzer angepasst sein.

Je nachdem, welches Nutzergerät oder welcher Nutzer identifiziert wurde, können bestimmte Informationen ausgegeben werden. Dadurch kann beispielsweise sichergestellt werden, dass ein Beifahrer oder weitere Fahrzeuginsassen durch ein bevorstehendes Fahrmanöver der automatischen Fahrfunktion nicht überrascht werden. Ferner können die weiteren Nutzer auf die Planung automatischer Fahrmanöver Einfluss nehmen, beispielsweise durch eine Besprechung im Fahrzeug. Ferner kann vorgesehen sein, dass bestimmte Steuerungssignale für die automatische Fahrtfunktion durch andere Fahrzeuginsassen als dem Fahrer erzeugt werden, beispielsweise betreffend die Routenplanung oder ein allgemeines Fahrverhalten.

Die Identifikation kann auf unterschiedliche, an sich bekannte Weise durchgeführt werden, beispielsweise mittels eines Benutzerprofils, einer Identifikation mittels Passwort, mittels biometrischer Daten oder mittels eines physischen Gegenstandes (Fahrzeugschlüssel, physische Identität des Nutzergeräts). Alternativ oder zusätzlich kann eine Identifikation anhand einer Annäherungserfassungseinrichtung für einen Touchscreen im Fahrzeug erfolgen, wobei beispielsweise erfasst wird, aus welcher Richtung die Hand eines Bedieners auf den Touchscreen zugreift, insbesondere aus Richtung des Fahrer- oder Beifahrersitzes. Ferner kann ein elektromagnetisches Feld in einen Nutzer eingekoppelt werden und das durch den Finger des Nutzers ausgekoppelte Feld kann zur Identifikation verwendet werden.

Bei einer Weiterbildung sind ferner weitere Informations-Auswahlobjekte umfasst, bei deren Betätigung ein Zustand des Fahrzeugs ausgegeben wird. Dadurch können vorteilhafterweise Informationen über den Fahrzeugzustand und/oder über die automatische Fahrfunktion verfügbar gemacht werden.

Bei einer Betätigung eines Informations-Auswahlobjekts können beispielsweise Fahrtparameter ausgegeben werden, wie etwa eine aktuelle Geschwindigkeit, eine Richtgeschwindigkeit, ein Ziel einer Route, bevorstehende Überholmanöver, allgemeine Einstellungen zum Überholverhalten, die nächsten geplanten Manöver und Richtungsänderungen, geplante Abfahrten von der Straße oder andere Informationen.

Bei einer Ausbildung der Erfindung wird in Abhängigkeit von dem ausgewählten ersten oder weiteren Auswahlobjekt ein Einstellungsparameter für die automatische Fahrfunktion erfasst oder ein Fahrprofil aktiviert. Insbesondere umfasst der Einstellungsparameter eine Sollgeschwindigkeit oder einen Grad einer defensiven oder sportlichen Fahrweise. Hierdurch kann beispielsweise gesteuert werden, ob eine höhere (sportlich) oder geringere (defensiv) Querbeschleunigung bei einem Richtungswechsel, etwa zum Überholen, erreicht werden soll. Ferner kann das Fahrprofil mehrere Einstellungsparameter umfassen, die beispielsweise vom Hersteller eines Fahrzeugs oder eines Systems vorgegeben oder durch einen Nutzer selbst definierbar sind. Hierdurch kann vorteilhafterweise die automatische Fahrfunktion auf die Bedürfnisse eines Nutzers angepasst werden. Die Einstellung des Fahrverhaltens mittels der automatischen Fahrfunktion kann auf besonders einfache und schnelle Weise erfolgen.

Bei einer weiteren Ausbildung wird ein Fahrprofil anhand von Daten erzeugt, die während einer manuellen Fahrt eines Nutzers oder während einer simulierten Fahrt des Nutzers erfasst werden. Das Fahrprofil kann dadurch so gebildet werden, dass es, zumindest betreffend einen oder mehrere Einstellungsparameter, die manuelle Fahrweise des Nutzers nachahmt. Beispielsweise kann eine Durchschnittsgeschwindigkeit ermittelt werden, die ein Nutzer bei manueller Fahrt typischerweise in bestimmten Situationen erreicht. Ferner kann ein Überholverhalten bestimmt und gespeichert werden.

Bei einer Weiterbildung umfassen die Grafikdaten ferner zumindest eine Schaltfläche, wobei bei einer Betätigung der Schaltfläche ein Steuersignal erzeugt wird, wobei die automatische Fahrfunktion in Abhängigkeit von dem Steuersignal ausgeführt wird. Insbesondere kann dabei eine Schnellwahltaste für ein bestimmtes Manöver oder zur Einstellung eines bestimmten Einstellungsparameters oder Fahrprofils bereitgestellt werden. Dadurch wird vorteilhafterweise erreicht, dass bestimmte Bedienungen besonders schnell vorgenommen werden können.

Es können beispielsweise Schnellwahltasten in einem Bereich angezeigt werden, welcher an die Umfelddarstellung angrenzt. Die Schnellwahltasten können ferner mittels physischer Schalter ausgeführt sein. Insbesondere umfassen die Schaltflächen eine grafische Darstellung, welche ein bestimmtes Fahrmanöver symbolisieren.

Das erfindungsgemäße System zum Betreiben einer automatischen Fahrfunktion in einem Fahrzeug umfasst eine Umfelderfassungseinheit, durch die Umfelddaten in einer Umgebung des Fahrzeugs erfassbar sind. Es umfasst ferner eine Steuereinheit, durch die anhand der erfassten Umfelddaten Grafikdaten einer Umfelddarstellung mit zumindest einem ersten Bedienobjekt erzeugbar und mittels einer Anzeigeeinheit ausgebbar sind, sowie eine Eingabeeinheit, durch die eine Betätigung des ersten Bedienobjekts erfassbar ist. Dabei ist die Steuereinheit so eingerichtet, dass, wenn die Betätigung des ersten Bedienobjekts erfasst wird, ein Auswahlobjekt erzeugt wird, das dem ersten Bedienobjekt zugeordnet ist. Es wird ferner eine Betätigung des Auswahlobjekts erfasst und in Abhängigkeit von dem Betätigen des Auswahlobjekts wird ein Steuersignal erzeugt. Dabei ist die automatische Fahrfunktion in Abhängigkeit von dem Steuersignal ausführbar. Erfindungsgemäß ist die Steuereinheit so eingerichtet, dass die Umfelddarstellung zumindest ein weiteres Bedienobjekt umfasst, wobei, wenn eine Betätigung eines weiteren Bedienobjekts erfasst wird, ein weiteres Auswahlobjekt erzeugt wird, das dem betätigten weiteren Bedienobjekt zugeordnet ist. Wenn eine Betätigung des weiteren Auswahlobjekts erfasst wird, wird in Abhängigkeit von dem Betätigen des weiteren Auswahlobjekts ein Steuersignal erzeugt, wobei die automatische Fahrfunktion in Abhängigkeit von dem Steuersignal ausgeführt wird.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Insbesondere wird die Betätigung des Bedienobjekts und/oder des Auswahlobjekts mittels eines Touchscreens, Touchpads, Joysticks oder Lenkstockschalters erfasst. Alternativ oder zusätzlich umfasst die Eingabeeinheit eine weitere Einrichtung zur Erfassung einer Nutzereingabe oder einer Betätigung.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Systems und
- Figuren 2A, 2B und 2C: zeigen Beispiele von Umfelddarstellungen, die bei einem Ausführungsbeispiel des erfindungsgemäßen Verfahrens erzeugt werden.

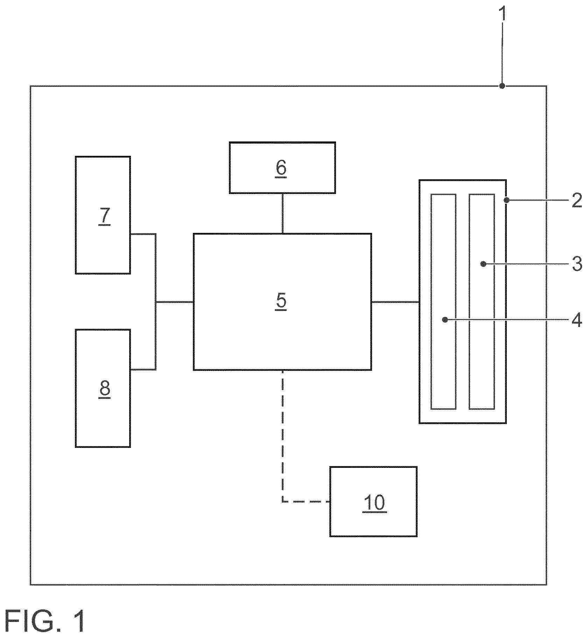

Mit Bezug zu Figur 1 wird ein Fahrzeug mit einem Ausführungsbeispiel des erfindungsgemäßen Systems erläutert.

Ein Fahrzeug 1 umfasst eine Steuereinheit 5. Mit dieser sind ein Touchscreen 2, eine Umfelderfassungseinheit 6, eine Antriebseinheit 7 und eine Lenkungseinheit 8 gekoppelt. Die Umfelderfassungseinheit 6 umfasst bei dem Ausführungsbeispiel mehrere unterschiedliche Sensoren, durch die Umfelddaten in einer Umgebung des Fahrzeugs 1 erfassbar sind. Die Sensoren sind nicht näher dargestellt und umfassen insbesondere eine Kamera und weitere optische Sensoren, Radar-, Lidar- und Ultraschallsensoren sowie eine Schnittstelle zu einem externen Server, wobei eine Kommunikation mit einem externen Dienst zur Bereitstellung von durch andere Einrichtungen erfasste Daten über die Umgebung des Fahrzeugs ermöglicht wird.

Der Touchscreen 2 umfasst eine Anzeigeeinheit 3 und eine Eingabeeinheit 4. Diese sind auf an sich bekannte Weise hintereinander so angeordnet, dass eine berührungsempfindliche Oberfläche der Eingabeeinheit 4 über der Anzeigeeinheit 3 angeordnet ist und Berührungen an einer bestimmten Position der berührungsempfindlichen Oberfläche einer Position innerhalb einer Anzeige auf der Anzeigeeinheit 3 zugeordnet werden können. Mit der Steuereinheit 5 ist ferner ein Nutzergerät 10 gekoppelt. Diese Koppelung umfasst eine datentechnische Verbindung und ist insbesondere lösbar oder drahtlos ausgebildet. Insbesondere kann zwischen der Steuereinheit 5 und dem Nutzergerät 10 eine datentechnische Funkverbindung bestehen, die durch an sich bekannte Verfahren aufgebaut wird, etwa mittels WLAN, Bluetooth oder Nahfeldkommunikation (NFC). Das Nutzergerät 10 kann ferner mittels einer kabelgebundenen datentechnischen Verbindung an die Steuereinheit 5 angeschlossen sein, insbesondere mittels einer Aufnahmevorrichtung in dem Fahrzeug 1. Das Nutzergerät 10 ist insbesondere in dem Fahrzeug 1 angeordnet, wobei die Position innerhalb oder außerhalb des Fahrzeugs 1 durch eine Positionserfassungseinheit erfasst werden kann, um insbesondere sicherzustellen, dass sich das Nutzergerät 10 in dem Fahrzeug befindet. Bei dem Nutzergerät 10 kann es sich beispielsweise um ein Mobiltelefon, ein Tablet, einen tragbaren Computer oder eine Smartwatch eines Nutzers handeln.

Mit Bezug zu Figur 1 wird ein Ausführungsbeispiel des erfindungsgemäßen Verfahrens erläutert. Dabei wird von der obigen Beschreibung des Ausführungsbeispiels des erfindungsgemäßen Systems ausgegangen.

Anhand der Sensoren der Umfelderfassungseinheit 6 werden Umfelddaten in einer Umgebung des Fahrzeugs 1 erfasst. Die Umfelddaten umfassen Informationen über weitere Verkehrsteilnehmer, einen Verlauf des befahrenen Verkehrswegs sowie über andere verkehrsrelevanten Einrichtungen, Markierungen und Objekte. Die Umfelddaten umfassen insbesondere Positionen und Geschwindigkeiten anderer Verkehrsteilnehmer relativ zum eigenen Fahrzeug sowie eine Position des eigenen Fahrzeugs, insbesondere relativ zu dem befahrenen Verkehrsweg, das heißt beispielsweise eine Position auf einer bestimmten Fahrspur. Es können ferner Daten über die aktuelle Fahrsituation des Fahrzeugs 1 umfasst sein, beispielsweise die eigene Geschwindigkeit, Richtung oder geografische Position, erfasst etwa mittels fahrzeugeigener Sensoren zur Überwachung der Fahrparameter und/oder ein Positionsbestimmungssystem (zum Beispiel GPS).

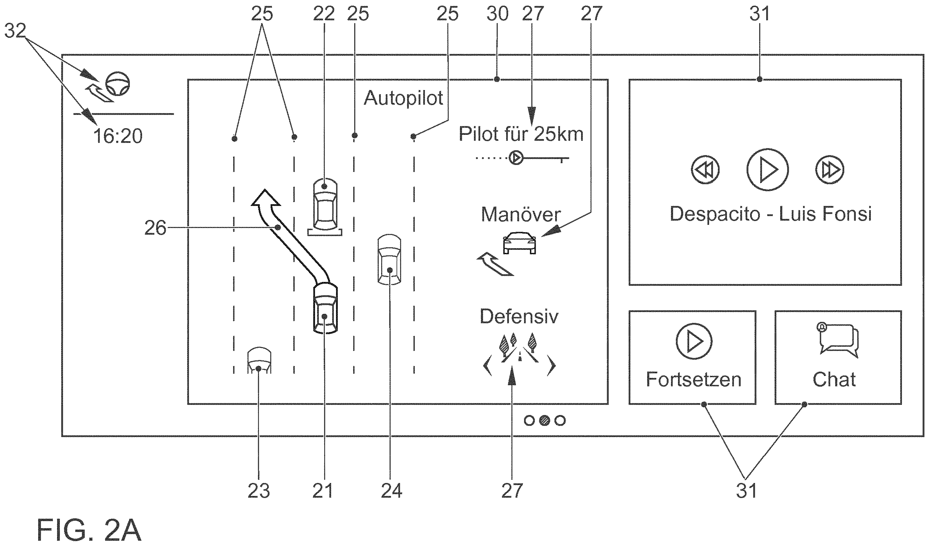

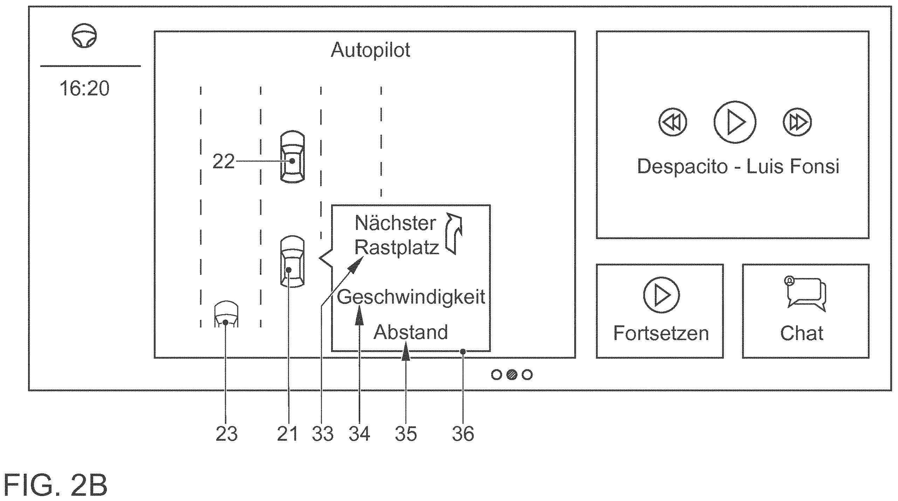

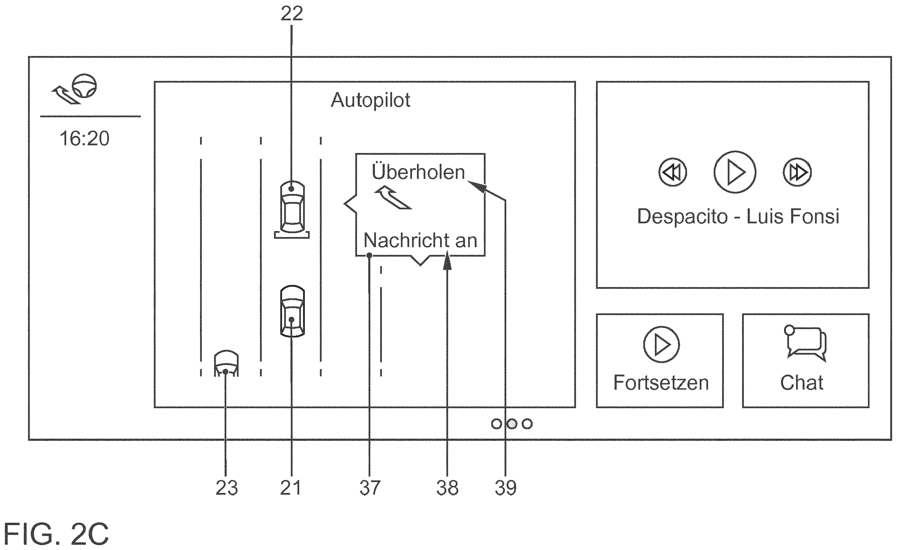

Anhand der erfassten Umfelddaten werden Grafikdaten einer Umfelddarstellung erzeugt und mittels der Anzeigeeinheit 3 ausgegeben. Beispiele von Umfelddarstellungen sind in den Figuren 2A, 2B und 2C gezeigt.

Bei dem in Figur 2A dargestellten Fall umfasst die Umfelddarstellung ein erstes Bedienobjekt 21, welches das eigene Fahrzeug 1 repräsentiert. In Fahrtrichtung vor dem eigenen Fahrzeug 1 befindet sich ein weiteres Fahrzeug, das in der Umfelddarstellung durch ein weiteres Bedienobjekt 22 repräsentiert ist. Die Umfelddarstellung umfasst ferner ein weiteres Bedienobjekt 23, welches ein Fahrzeug schräg links hinter dem eigenen Fahrzeug 1 repräsentiert, sowie ein weiteres Bedienobjekt 24, das ein Fahrzeug schräg rechts vor dem eigenen Fahrzeug 1 repräsentiert. Dabei werden die Bedienobjekte 21, 22, 23, 24 als Fahrzeugsymbole dargestellt.

Die Umfelddarstellung umfasst ferner einen Pfeil 26, der einen geplanten Spurwechsel des eigenen Fahrzeugs 1 zur Durchführung eines Überholvorgangs anzeigt. Die Umfelddarstellung umfasst ferner Straßenmarkierungen 25, insbesondere durchgezogene Linien, die den Rand des befahrbaren Bereichs der Fahrbahn markieren, und gestrichelte Linien, die einzelne Fahrspurbegrenzungen markieren. Die Anzeige umfasst ferner Schaltflächen 27 mit Symbolen, die verschiedene Nutzereingaben symbolisieren. Insbesondere sind dies: Aufruf einer Navigationsfunktion und/oder einer Funktion zur Aktivierung einer automatischen Fahrfunktion für eine bestimmte Route, Eingabe eines Fahrmanövers und Auswahl eines Fahrprofils.

Die Umfelddarstellung wird bei der in Figur 2A dargestellten Anzeige in einem Anzeigefenster 30 ausgegeben, wobei die Anzeige ferner weitere Anzeigefenster 31 und Anzeigeobjekte 32 umfasst. Die Anzeigefenster 30, 31 sind auf an sich bekannte Weise als Bereiche der Anzeigefläche der Anzeigeeinheit 3 ausgebildet und unterschiedlichen Anwendungen zugeordnet. Das Anzeigefenster 30 für die Umfelddarstellung und Ausgaben im Zusammenhang mit einer automatischen Fahrfunktion des Fahrzeugs 1 nimmt bei einem dargestellten Ausführungsbeispiel etwa die Hälfte der verfügbaren Anzeigefläche ein. Die weiteren Anzeigefenster 31 betreffen beispielsweise Ausgaben einer Medienwiedergabe und eines Messengers zum Anzeigen und Verwalten von Textnachrichten. Die Anzeigefenster 30, 31 können auf andere, an sich bekannte Weisen gebildet sein sowie andere Anwendungen betreffen. Die Anzeigeobjekte 32 umfassen bei den Beispielen eine Anzeige der aktuellen Uhrzeit sowie eine Symboldarstellung zur Ausgabe von Nachrichten für die automatische Fahrfunktion. Im dargestellten Fall symbolisiert ein Lenkrad eine automatische Steuerung des Fahrzeugs 1 und ein gebogener Pfeil symbolisiert ein bevorstehendes Überholmanöver.

Bei dem in Figur 2B dargestellten Fall hat ein Nutzer den Touchscreen 2 im Bereich des ersten Bedienobjekts 21, das heißt des Symbols für das eigene Fahrzeug 1, berührt und es wurde ein Auswahlobjekt 36 erzeugt, das räumlich und anhand einer Pfeilform neben dem ersten Bedienobjekt so dargestellt ist, dass die Zuordnung des Auswahlobjekts 36 zu dem ersten Bedienobjekt 21 sichtbar dargestellt wird. Das Auswahlobjekt 36 umfasst drei Auswahloptionen 33, 34, 35. Eine erste Auswahloption 33 umfasst die Textdarstellung "Nächster Rastplatz" und ein Pfeilsymbol, bei der nächsten Auswahloption 34 ist der Text "Geschwindigkeit" und bei der weiteren Auswahloption 35 der Text "Abstand" dargestellt.

Bei weiteren Ausführungsbeispielen kann das Auswahlobjekt 36 weitere Auswahloptionen 33, 34, 35 umfassen, die insbesondere Fahrmanöver und Einstellungen für die automatische Fahrfunktion betreffend das eigene Fahrzeug 1 umfassen.

Durch Betätigen einer Auswahloption 33, 34, 35, das heißt durch Berühren des Touchscreens 2 im Bereich einer der Auswahloptionen 33, 34, 35, kann ein Nutzer die automatische Steuerung des Fahrzeugs 1 so ansteuern, dass ein bestimmtes Fahrmanöver durchgeführt wird, oder eine bestimmte Einstellung vorgenommen werden kann. So wird, wenn die Auswahloption 33 "Nächster Rastplatz" ausgewählt wird, die nächste Möglichkeit zum Verlassen der derzeit befahrenen Route zum Einfahren in einen Rastplatz gesucht und dieser Rastplatz wird angesteuert. Nach dem Betätigen der Auswahloption 34 "Geschwindigkeit" wird ein weiteres Bedienobjekt erzeugt (nicht in der Zeichnung gezeigt), anhand dessen der Nutzer eine neue Richtgeschwindigkeit eingeben kann oder in dem der Nutzer eine Einstellung für die automatische Fahrfunktion vornehmen kann, welche in einer schnelleren oder langsameren angestrebten Sollgeschwindigkeit der automatischen Fahrfunktion resultiert. Bei dem Betätigen der Auswahloption 35 ("Abstand") wird ähnlich wie oben für die Geschwindigkeit beschrieben eine Eingabemöglichkeit dargestellt, bei welcher der angestrebte Abstand zu weiteren insbesondere vorausfahrenden Verkehrsteilnehmern eingestellt werden kann, wobei durch die automatische Fahrfunktion sichergestellt wird, dass ein bestimmter Sicherheitsabstand nicht unterschritten wird. Weitere Fahrmanöver und Einstellungsparameter können alternativ oder zusätzlich von dem Auswahlobjekt 36 umfasst sein.

Die Anzeige kann ferner Informations-Auswahlobjekte umfassen, bei denen vorgesehen ist, dass bei ihrer Betätigung eine bestimmte Information über den Zustand des Fahrzeugs oder die aktuelle Fahrtsituation, sowie geplante Fahrmanöver oder Einstellungen und Modalitäten der aktuell durchgeführten automatischen Fahrfunktion angezeigt werden. Die Ausgabe der Informationen erfolgt in diesem Fall auf an sich bekannte Weise, insbesondere mittels eines Fensters, das innerhalb des Anzeigefensters 30 erzeugt wird. Alternativ oder zusätzlich kann vorgesehen sein, dass die Informationsausgabe in einem anderen Anzeigefenster 31 ausgegeben wird.

Bei dem in Figur 2C dargestellten Fall hat der Nutzer das weitere Bedienobjekt 22, welches ein vor dem eigenen Fahrzeug 1 fahrendes weiteres Fahrzeug darstellt, betätigt. Es erscheint ein weiteres Auswahlobjekt 37, das dem weiteren Bedienobjekt 22 durch seine Anordnung und durch eine Pfeilform zugeordnet ist. Dieses weitere Auswahlobjekt umfasst eine Auswahloption mit der Textdarstellung "Überholen" und einer Pfeildarstellung sowie eine weitere Auswahloption 38 mit dem Text "Nachricht an". Die von dem weiteren Auswahlobjekt 37 umfassten Auswahloptionen 38, 39 umfassen automatische Fahrfunktionen, weitere Funktionalitäten und Einstellungsparameter der automatischen Fahrfunktion, die ein Verhalten des eigenen Fahrzeugs 1 im Verhältnis zu anderen Fahrzeugen betreffen, in diesem Fall im Verhältnis zu dem vorausfahrenden weiteren Fahrzeug. Es können daher auch andere Auswahloptionen aus diesem oder einem vergleichbaren Bereich umfasst sein.

Betätigt der Nutzer den Touchscreen 2 im Bereich der Auswahloption 38 ("Überholen"), so wird ein Überholvorgang durch die automatische Fahrfunktion eingeleitet. Dabei wird insbesondere in einem Speicher für die automatische Fahrfunktion ein Steuersignal abgelegt, welches dazu führt, dass das Überholmanöver durchgeführt wird, wenn dies sicher erfolgen kann. Auf diese Weise wird sichergestellt, dass die Fahrt des Fahrzeugs 1 sicher durchgeführt wird. Betätigt der Nutzer den Touchscreen 2 im Bereich der weiteren Auswahloption 39 ("Nachricht an"), so wird eine Eingabemöglichkeit dargestellt, durch die ein Nutzer eine Nachricht an das vorausfahrende Fahrzeug beziehungsweise an dessen Fahrzeugführer senden kann, insbesondere eine Textnachricht. Eine solche Nachricht kann mittels einer Tastatur, mittels Spracheingabe, durch Auswahl einer vorgefertigten Nachricht oder auf andere an sich bekannte Weise eingegeben werden.

Bei einem Ausführungsbeispiel erfolgt die Ausgabe mittels des Touchscreens 2 des Fahrzeugs 1 und dieses ist an der Mittelkonsole so angeordnet, dass der Fahrer des Fahrzeugs 1 Bedienhandlungen vornehmen kann. In einem weiteren Ausführungsbeispiel ist der Touchscreen 2 mit einer Annäherungserfassung versehen, die so ausgebildet ist, dass die Richtung, aus welcher sich ein Nutzer zur Bedienung des Touchscreen nähert, bestimmt werden kann. Dies kann beispielsweise mittels einer Kamera oder einer kapazitiven oder optischen Annäherungserkennung implementiert sein. Dabei wird eine Identifikation des Nutzers vorgenommen, indem bestimmt wird, ob die Annäherung aus Richtung des Fahrersitzes oder aus Richtung des Beifahrersitzes erfolgt.

Es sind unterschiedliche Berechtigungen verschiedener Nutzer vorgesehen, wobei insbesondere der Fahrer des Fahrzeugs 1 in die aktiven Funktionen der automatischen Fahrfunktion eingreifen kann, insbesondere um bestimmte Fahrmanöver auszulösen oder eine Geschwindigkeit oder einen Abstand einzustellen. Wird eine Bedienung durch den Beifahrer erkannt, so kann dieser die entsprechenden Auswahloptionen nicht auswählen, was auf an sich bekannte Weise durch eine veränderte Darstellung, etwa durch ein entsprechendes Symbol, eine ausgegraute oder zumindest teilweise transparente Darstellung oder auf andere Weise angezeigt werden kann.

Zudem kann die Anzeige so verändert werden, dass für den Beifahrer relevante Informationen über die aktuelle Fahrt und insbesondere über Funktionen der automatischen Fahrfunktion ausgegeben werden, beispielsweise geplante Manöver, eine aktuell eingestellte Sollgeschwindigkeit oder ein aktuell eingestellter Abstand. Ferner können Informationen zur Routenführung sowie gegebenenfalls Möglichkeiten zur Veränderung einer geplanten Route angezeigt werden, wobei die Berechtigungen hierfür einstellbar sein können. Beispielsweise kann vorgesehen sein, dass ein Fahrer oder ein Nutzer mit besonderen Rechten die Bedienung von einzelnen Funktionalitäten für weitere Benutzer freigeben kann, etwa für eine gemeinsam durchgeführte Routenplanung.

Bei einem weiteren Ausführungsbeispiel wird die Anzeige zu dem Nutzergerät 10 übertragen und von diesem dargestellt, wobei auch hier eine Identifikation des Nutzergeräts und/oder des Nutzers, der diesem Nutzergerät 10 zugeordnet ist, vorgenommen wird. Dem Nutzergerät 10 beziehungsweise seinem Nutzer können verschiedene Berechtigungen zugeordnet sein, die bestimmen, welche Funktionalitäten bedienbar, welche Informationen einsehbar und welche Funktionalitäten steuerbar sind. Die Darstellung und die bereitgestellten Bedienungsoptionen können ähnlich wie oben für den Beifahrer erläutert, für das Nutzergerät 10 angepasst werden.

Insbesondere können mehrere Nutzergeräte 10 vorgesehen sein. Bei einem Ausführungsbeispiel umfasst das System den Touchscreen 2 an der Mittelkonsole des Fahrzeugs 1 sowie weitere Nutzergeräte 10, die sowohl im Fahrzeug integriert sein können als Touchscreens, die der Sitzposition des Beifahrers und/oder den Sitzpositionen von Passagieren im Fahrzeugfond zugeordnet sind, sowie mobile Geräte von Nutzern, insbesondere solcher, die sich in dem Fahrzeug 1 befinden. Durch eine geeignete Ausbildung der unterschiedlichen Berechtigungen verschiedener Nutzer und Nutzergeräte 10 kann sichergestellt werden, dass für einzelne Fahrzeuginsassen relevante Informationen abrufbar sind und gemeinsame Steuerungsaufgaben für eine automatische Fahrfunktion durchgeführt werden können.

### Bezugszeichenliste

- 1: Fahrzeug
- 2: Touchscreen
- 3: Anzeigeeinheit
- 4: Eingabeeinheit
- 5: Steuereinheit
- 6: Umfelderfassungseinheit
- 7: Antriebseinheit
- 8: Lenkungseinheit
- 10: Nutzergerät
- 21: erstes Bedienobjekt; Fahrzeugsymbol "eigenes Fahrzeug"
- 22: weiteres Bedienobjekt; Fahrzeugsymbol "vorausfahrendes Fahrzeug"
- 23: weiteres Bedienobjekt; Fahrzeugsymbol "weiteres Fahrzeug schräg hinten"
- 24: weiteres Bedienobjekt; Fahrzeugsymbol "weiteres Fahrzeug schräg vorne"
- 25: Fahrbahnmarkierung
- 26: Pfeil
- 27: Schaltfläche
- 30: Anzeigefenster
- 31: weiteres Anzeigefenster
- 32: Anzeigeobjekt
- 33: Auswahloption "Nächster Rastplatz"
- 34: Auswahloption "Geschwindigkeit"
- 35: Auswahloption "Abstand"
- 36: Auswahlobjekt
- 37: weiteres Auswahlobjekt
- 38: Auswahloption "Überholen"
- 39: Auswahloption "Nachricht an"

## Patentansprüche

1. Verfahren zum Betreiben einer automatischen Fahrfunktion in einem Fahrzeug (1), bei dem
Umfelddaten in einer Umgebung des Fahrzeugs (1) erfasst werden; und
anhand der erfassten Umfelddaten Grafikdaten einer Umfelddarstellung erzeugt und ausgegeben werden;
wobei die Umfelddarstellung zumindest ein erstes Bedienobjekt (21) umfasst;
wobei, wenn eine Betätigung eines ersten Bedienobjekts (21) erfasst wird:
ein Auswahlobjekt (36) erzeugt wird, das dem ersten Bedienobjekt (21) zugeordnet ist;
eine Betätigung des Auswahlobjekts (36) erfasst wird; und
in Abhängigkeit von dem Betätigen des Auswahlobjekts (36) ein Steuersignal erzeugt wird, wobei die automatische Fahrfunktion in Abhängigkeit von dem Steuersignal ausgeführt wird,
**dadurch gekennzeichnet, dass**
die Umfelddarstellung zumindest ein weiteres Bedienobjekt (22, 23, 24) umfasst;
wobei, wenn eine Betätigung eines weiteren Bedienobjekts (22, 23, 24) erfasst wird:
ein weiteres Auswahlobjekt (37) erzeugt wird, das dem betätigten weiteren Bedienobjekt (22, 23, 24) zugeordnet ist;
eine Betätigung des weiteren Auswahlobjekts (37) erfasst wird; und
in Abhängigkeit von dem Betätigen des weiteren Auswahlobjekts (37) ein Steuersignal erzeugt wird, wobei die automatische Fahrfunktion in Abhängigkeit von dem Steuersignal ausgeführt wird.

2. Verfahren gemäß Anspruch 1,
**dadurch gekennzeichnet, dass**
in Abhängigkeit von dem Betätigen des Auswahlobjekts (36) ein Steuersignal erzeugt wird, das einen Spurwechsel, ein Abbiegen, eine Änderung des Abstandes zu anderen Verkehrsteilnehmern oder eine Änderung der Geschwindigkeit des Fahrzeugs (1) betrifft.

3. Verfahren gemäß Anspruch 1 oder 2,
**dadurch gekennzeichnet, dass**
in Abhängigkeit von dem Betätigen des weiteren Auswahlobjekts (37) ein Steuersignal erzeugt wird, das ein Fahrmanöver im Verhältnis zu einem anderen Verkehrsteilnehmer betrifft.

4. Verfahren gemäß einem der vorhergehenden Ansprüche,
**dadurch gekennzeichnet, dass**
die Grafikdaten an ein Nutzergerät (10) übertragen und durch das Nutzergerät (10) ausgegeben werden; wobei
das Nutzergerät (10) einem Beifahrer oder einem Fahrzeugpassagier zugeordnet ist.

5. Verfahren gemäß Anspruch 4,
**dadurch gekennzeichnet, dass**
eine Identifikation des Nutzergeräts (10) durchgeführt wird und
die Auswahlobjekte (36, 37) in Abhängigkeit von der Identifikation erzeugt werden.

6. Verfahren gemäß Anspruch 5,
**dadurch gekennzeichnet, dass**
ferner weitere Informations-Auswahlobjekte umfasst sind, bei deren Betätigung ein Zustand des Fahrzeugs (1) ausgegeben wird.

7. Verfahren gemäß einem der vorhergehenden Ansprüche,
**dadurch gekennzeichnet, dass**
in Abhängigkeit von dem ausgewählten ersten (36) oder weiteren Auswahlobjekt (37) ein Einstellungsparameter für die automatische Fahrfunktion erfasst wird oder ein Fahrprofil aktiviert wird.

8. Verfahren gemäß einem der vorhergehenden Ansprüche,
**dadurch gekennzeichnet, dass**
die Grafikdaten ferner zumindest eine Schaltfläche (27) umfassen; wobei
bei einer Betätigung der Schaltfläche (27) ein Steuersignal erzeugt wird, wobei die automatische Fahrfunktion in Abhängigkeit von dem Steuersignal ausgeführt wird.

9. System zum Betreiben einer automatischen Fahrfunktion in einem Fahrzeug (1), mit
einer Umfelderfassungseinheit (6), durch die Umfelddaten in einer Umgebung des Fahrzeugs (1) erfassbar sind;
einer Steuereinheit (5), durch die anhand der erfassten Umfelddaten Grafikdaten einer Umfelddarstellung mit zumindest einem ersten Bedienobjekt (21) erzeugbar und mittels einer Anzeigeeinheit (3) ausgebbar sind; und
einer Eingabeeinheit (4), durch die eine Betätigung des ersten Bedienobjekts (21) erfassbar ist;
wobei die Steuereinheit (5) so eingerichtet ist, dass, wenn die Betätigung des ersten Bedienobjekts (21) erfasst wird:
ein Auswahlobjekt (36) erzeugt wird, das dem ersten Bedienobjekt (21) zugeordnet ist;
eine Betätigung des Auswahlobjekts (36) erfasst wird; und
in Abhängigkeit von dem Betätigen des Auswahlobjekts (36) ein Steuersignal erzeugt wird; wobei die automatische Fahrfunktion in Abhängigkeit von dem Steuersignal ausführbar ist,
**dadurch gekennzeichnet, dass**
die Steuereinheit (5) ferner so eingerichtet ist, dass die Umfelddarstellung zumindest ein weiteres Bedienobjekt (22, 23, 24) umfasst; wobei, wenn eine Betätigung eines weiteren Bedienobjekts (22, 23, 24) erfasst wird:
ein weiteres Auswahlobjekt (37) erzeugt wird, das dem betätigten weiteren Bedienobjekt (22, 23, 24) zugeordnet ist; und,
wenn eine Betätigung des weiteren Auswahlobjekts (37) erfasst wird, in Abhängigkeit von dem Betätigen des weiteren Auswahlobjekts (37) ein Steuersignal erzeugt wird, wobei die automatische Fahrfunktion in Abhängigkeit von dem Steuersignal ausgeführt wird.

## Claims

1. Method for operating an automatic driving function in a vehicle (1), in which
environment data are captured in surroundings of the vehicle (1); and
the captured environment data are used to generate and output graphics data relating to an environmental representation;
wherein the environmental representation comprises at least one first operator control object (21);
wherein, if actuation of a first operator control object (21) is detected:
a selection object (36) associated with the first operator control object (21) is generated;
actuation of the selection object (36) is detected; and
the actuating of the selection object (36) is taken as a basis for generating a control signal, the automatic driving function being performed on the basis of the control signal,
**characterized in that**
the environmental representation comprises at least one further operator control object (22, 23, 24);
wherein, if actuation of a further operator control object (22, 23, 24) is detected:
a further selection object (37) associated with the actuated further operator control object (22, 23, 24) is generated;
actuation of the further selection object (37) is detected; and
the actuating of the further selection object (37) is taken as a basis for generating a control signal, the automatic driving function being performed on the basis of the control signal.

2. Method according to Claim 1,
**characterized in that**
the actuating of the selection object (36) is taken as a basis for generating a control signal that relates to a lane change, a turn, a change of distance from other road users or a change of velocity of the vehicle (1).

3. Method according to Claim 1 or 2,
**characterized in that**
the actuating of the further selection object (37) is taken as a basis for generating a control signal that relates to a driving manoeuvre in relation to another road user.

4. Method according to one of the preceding claims,
**characterized in that**
the graphics data are transmitted to a user device (10) and are output by the user device (10); wherein
the user device (10) is associated with a front seat passenger or a vehicle passenger.

5. Method according to Claim 4,
**characterized in that**
identification of the user device (10) is performed and the selection objects (36, 37) are generated on the basis of the identification.

6. Method according to Claim 5,
**characterized in that**
further information selection objects are also included, actuation of which results in a state of the vehicle (1) being output.

7. Method according to one of the preceding claims,
**characterized in that**
the selected first (36) or further selection object (37) is taken as a basis for measuring a setting parameter for the automatic driving function or for activating a driving profile.

8. Method according to one of the preceding claims,
**characterized in that**
the graphics data also comprise at least one button (27); wherein
actuation of the button (27) results in a control signal being generated, the automatic driving function being performed on the basis of the control signal.

9. System for operating an automatic driving function in a vehicle (1), having
an environment detection unit (6) by way of which environment data can be captured in surroundings of the vehicle (1);
a control unit (5) by way of which the captured environment data can be used to generate graphics data relating to an environmental representation containing at least one first operator control object (21) and to output said graphics data by means of a display unit (3); and
an input unit (4) by way of which actuation of the first operator control object (21) can be detected; wherein the control unit (5) is configured such that, if the actuation of the first operator control object (21) is detected:
a selection object (36) associated with the first operator control object (21) is generated;
actuation of the selection object (36) is detected; and
the actuating of the selection object (36) is taken as a basis for generating a control signal, the automatic driving function being able to be performed on the basis of the control signal,
**characterized in that**
the control unit (5) is also configured such that the environmental representation comprises at least one further operator control object (22, 23, 24); wherein, if actuation of a further operator control object (22, 23, 24) is detected:
a further selection object (37) associated with the actuated further operator control object (22, 23, 24) is generated; and,
if actuation of the further selection object (37) is detected, the actuating of the further selection object (37) is taken as a basis for generating a control signal, the automatic driving function being performed on the basis of the control signal.

## Revendications

1. Procédé de fonctionnement d'une fonction de conduite automatique dans un véhicule (1), procédé dans lequel
des données d'environnement sont détectées dans un environnement du véhicule (1) ; et
des données graphiques d'une représentation d'environnement sont générées et délivrées sur la base des données d'environnement détectées ;
la représentation d'environnement comprenant au moins un premier objet de service (21) ;
lorsqu'un actionnement d'un premier objet de service (21) est détecté :
un objet de sélection (36) étant généré qui est associé au premier objet de service (21) ;
un actionnement de l'objet de sélection (36) étant détecté ; et
un signal de commande étant généré en fonction de l'actionnement de l'objet de sélection (36), la fonction de conduite automatique étant exécutée en fonction du signal de commande,
**caractérisé en ce que**
la représentation d'environnement comprend au moins un autre objet de service (22, 23, 24) ;
si un actionnement d'un autre objet de service (22, 23, 24) est détecté :
un autre objet de sélection (37) étant généré qui est associé à l'autre objet de service (22, 23, 24) actionné ;
un actionnement de l'autre objet de sélection (37) étant détecté ; et
un signal de commande étant généré en fonction de l'actionnement de l'autre objet de sélection (37), la fonction de conduite automatique étant exécutée en fonction du signal de commande.

2. Procédé selon la revendication 1,
**caractérisé en ce que**
en fonction de l'actionnement de l'objet de sélection (36), un signal de commande est généré qui concerne un changement de voie, un virage, une modification de la distance par rapport aux autres usagers de la route ou une modification de la vitesse du véhicule (1).

3. Procédé selon la revendication 1 ou 2,
**caractérisé en ce que**
en fonction de l'actionnement de l'autre objet de sélection (37), un signal de commande est généré qui concerne une manœuvre de conduite par rapport à un autre usager de la route.

4. Procédé selon l'une des revendications précédentes,
**caractérisé en ce que**
les données graphiques sont transmises à un organe utilisateur (10) et délivrées par l'organe utilisateur (10) ;
l'organe utilisateur (10) est associé à un passager avant ou à un passager du véhicule.

5. Procédé selon la revendication 4,
**caractérisé en ce que**
une identification de l'organe utilisateur (10) est effectuée et
les objets de sélection (36, 37) sont générés en fonction de l'identification.

6. Procédé selon la revendication 5,
**caractérisé en ce que**
en outre d'autres objets de sélection d'informations sont inclus dont l'actionnement entraîne la délivrance d'un état du véhicule (1).

7. Procédé selon l'une des revendications précédentes,
**caractérisé en ce que**
en fonction du premier objet de sélection (36) sélectionné ou de l'autre objet de sélection (37) sélectionné, un paramètre de réglage de la fonction de conduite automatique est détecté ou un profil de conduite est activé.

8. Procédé selon l'une des revendications précédentes,
**caractérisé en ce que**
les données graphiques comprennent en outre au moins un bouton de commande (27) ;
lors de l'actionnement du bouton de commande (27) un signal de commande est généré, la fonction de conduite automatique étant réalisée en fonction du signal de commande.

9. Système de fonctionnement d'une fonction de conduite automatique dans un véhicule (1), ledit système de fonctionnement comprenant
une unité de détection d'environnement (6) permettant de détecter des données d'environnement dans un environnement de véhicule (1) ;
une unité de commande (5) permettant de générer des données graphiques d'une représentation d'environnement avec au moins un premier objet de service (21) sur la base des données d'environnement détectées et de les délivrer au moyen d'une unité d'affichage (3) ; et
une unité d'entrée (4) permettant de détecter un actionnement du premier objet de service (21) ;
l'unité de commande (5) étant conçue de telle sorte que, lorsque l'actionnement du premier objet de service (21) est détecté :
un objet de sélection (36) soit généré qui est associé au premier objet de service (21) ;
un actionnement de l'objet de sélection (36) soit détecté ; et
un signal de commande soit généré en fonction de l'actionnement de l'objet de sélection (36) ; la fonction de conduite automatique étant réalisable en fonction du signal de commande,
**caractérisé en ce que**
l'unité de commande (5) est également conçue de telle sorte que la représentation d'environnement comprenne au moins un autre objet de service (22, 23, 24) ; lorsqu'un actionnement d'un autre objet de service (22, 23, 24) est détecté :
un autre objet de sélection (37) étant généré qui est associé à l'autre objet de service (22, 23, 24) actionné ; et,
lorsqu'un actionnement de l'autre objet de sélection (37) est détecté, un signal de commande étant généré en fonction de l'actionnement de l'autre objet de sélection (37), la fonction de conduite automatique étant réalisée en fonction du signal de commande.
